# EUROPÄISCHE PATENTSCHRIFT

(11) **EP 2 912 427 B1**
(45) Veröffentlichungstag und Bekanntmachung des Hinweises auf die Patenterteilung: **04.12.2019**
(21) Anmeldenummer: 13783278.8
(22) Anmeldetag: 17.10.2013
(51) Int. Cl.: G01M 1/04, B23B 31/00, B23B 31/117, B23B 31/30, G01D 11/02, B25B 5/06

(54) **AUSWUCHT- ODER MESSVORRICHTUNG**
BALANCING OR MEASURING DEVICE
DISPOSITIF D'ÉQUILIBRAGE OU DE MESURE

(30) Priorität: 25.10.2012 DE 102012110186
(43) Veröffentlichungstag der Anmeldung: 02.09.2015
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2013/071680
(87) Internationale Veröffentlichungsnummer: WO 2014/063979

(56) Entgegenhaltungen:
- DE-A1- 19 961 451
- US-A- 6 077 003

## Beschreibung

Die Erfindung betrifft eine Auswucht- oder Messvorrichtung nach dem Oberbegriff des Anspruchs 1 und eine Auswucht- und Messmaschine mit einer derartigen Auswucht- oder Messvorrichtung.

Die zum Auswuchten oder Vermessen von Werkzeugen, Werkzeughaltern oder anderen rotierenden Bauteilen verwendeten Auswucht- oder Messmaschinen enthalten üblicherweise einen mittels eines Antriebsmotors um eine Mittelachse drehbaren Grundkörper, der eine z.B. als zentrische Aufnahmeöffnung ausgebildete Aufnahme für das auszuwuchtende oder zu vermessende Bauteil enthält. Über eine geeignete Spannvorrichtung kann das auszuwuchtende oder zu vermessende Bauteil in bzw. an dem Grundkörpers gespannt werden. Um eine genaue Zentrierung des Bauteils an dem rotierenden Grundkörpers zu erhalten, muss sowohl die Aufnahme an dem Grundkörper als auch das entsprechende Gegenstück am auszuwuchtenden oder zu vermessenden Bauteil äußerst genau gefertigt sein. Da jedoch die Auswucht- oder Messvorrichtungen auch für unterschiedliche genau gefertigte Bauteile verwendet werden sollen und eine genau auf die Präzision der Aufnahme des Grundkörpers abgestimmte Fertigung der auszuwuchtenden oder zu vermessenden Bauteile nicht immer gewährleistet ist, werden z.B. Kugelbuchsen als zusätzliche Zentrierelemente eingesetzt. Diese Zentrierelemente sind aber verschleißempfindlich und können unerwünschte Druckstellen oder Laufspuren auf dem auszuwuchtenden oder zu vermessenden Bauteil hinterlassen. Außerdem weisen derartige Zentrierelemente eine fest vorgegebene und nicht ohne weiteres veränderbare radiale Vorspannkraft auf.

Eine gattungsgemäße Auswuchtvorrichtung ist aus der DE 199 61 451 bekannt. Diese enthält einen um eine Mittelachse drehbaren Grundkörper mit einer Aufnahme für einen Kupplungsschaft eines auszuwuchtenden oder zu vermessenden Bauteils und in dem Grundkörper angeordnete Zentrierelemente mit in Radialrichtung elastisch federnden und gegenüber der Aufnahme vorstehenden Stützbereichen zur Zentrierung des Kupplungsschafts.

Aus der US 6 077 003 ist ein Werkzeughalter mit einer verformbaren Hülse bekannt.

Aufgabe der Erfindung ist es, eine Auswucht- oder Messvorrichtung der eingangs genannten Art und eine Auswucht- oder Messmaschine zu schaffen, die flexibler einsetzbar sind.

Diese Aufgabe wird durch eine Auswucht- oder Messvorrichtung mit den Merkmalen des Anspruchs 1 und durch eine Auswucht- oder Messmaschine mit den Merkmalen des Anspruchs 16 gelöst. Zweckmäßige Weiterbildungen und vorteilhafte Ausführungsformen der Erfindung sind Gegenstand der Unteransprüche.

Die erfindungsgemäße Auswucht- und Messvorrichtung zeichnet sich dadurch aus, dass die radiale Vorspannung des mindestens einen Zentrierelements durch ein Druckfluid veränderbar ist. Dadurch kann die Vorspannkraft des Zentrierelements an die jeweiligen Anforderungen angepasst werden. Bei dem Druckfluid kann es sich z.B. um Druckluft, Hydraulikfluid oder ein anderes gasförmiges oder flüssiges Druckfluid handeln, durch welches das Zentrierelement radial beaufschlagt wird.

Vorzugsweise wird zwischen dem Grundkörper und dem mindestens einen Druckraum ein mit dem Druckfluid beaufschlagbarer Druckraum begrenzt. Durch Zuleitung des Druckfluids zum Druckraum kann so die Vorspannung des Zentrierelements erhöht werden.

Der Grundkörper kann in einer möglichen Ausführung eine als Aufnahmeöffnung ausgebildete Aufnahme für einen Kupplungsschaft des auszuwuchtenden oder zu vermessenden Bauteils aufweisen. Der Grundkörper kann aber auch die Form eines Zapfens aufweisen, an dessen Außenseite das Zentrierelement angebracht ist.

In einer vorteilhaften Ausführung kann das mindestens eine Zentrierelement als separates Bauteil ausgeführt und in eine ringförmige Vertiefung an der Oberseite des Grundkörpers eingesetzt sein. Das Zentrierelement kann z.B. als Zentrierring mit einem biegsamen inneren Stützbereich und zwei an einer Innenwand der Vertiefung abgestützten Stützschenkeln ausgebildet sein. Der Druckraum kann dabei durch die Innenwand der Vertiefung und die Innenseiten des biegsamen Stützbereichs und der beiden Stützschenkel begrenzt werden. Das Zentrierelement kann aber auch einteilig mit dem Grundkörper ausgeführt sein. Hierdurch kann der Fertigungs- und Montageaufwand verringert werden.

Die vorstehend beschriebene Auswucht- oder Messvorrichtung ist Teil einer Auswucht- oder Messmaschine, bei der das auszuwuchtende oder zu vermessende Bauteil über den Kupplungsschaft mit Hilfe einer an sich bekannten Spannvorrichtung in die Aufnahmeöffnung des um die Drehachse rotierenden Grundkörpers eingezogen und dort gehalten wird.

Weitere Besonderheiten und Vorzüge der Erfindung ergeben sich aus der folgenden Beschreibung bevorzugter Ausführungsbeispiele anhand der Zeichnung. Es zeigen:
- **Figur** 1: ein Ausführungsbeispiel einer Auswucht- oder Messvorrichtung in einem Querschnitt und
- Figur 2: eine Auswucht- oder Messvorrichtung in einer Perspektive.

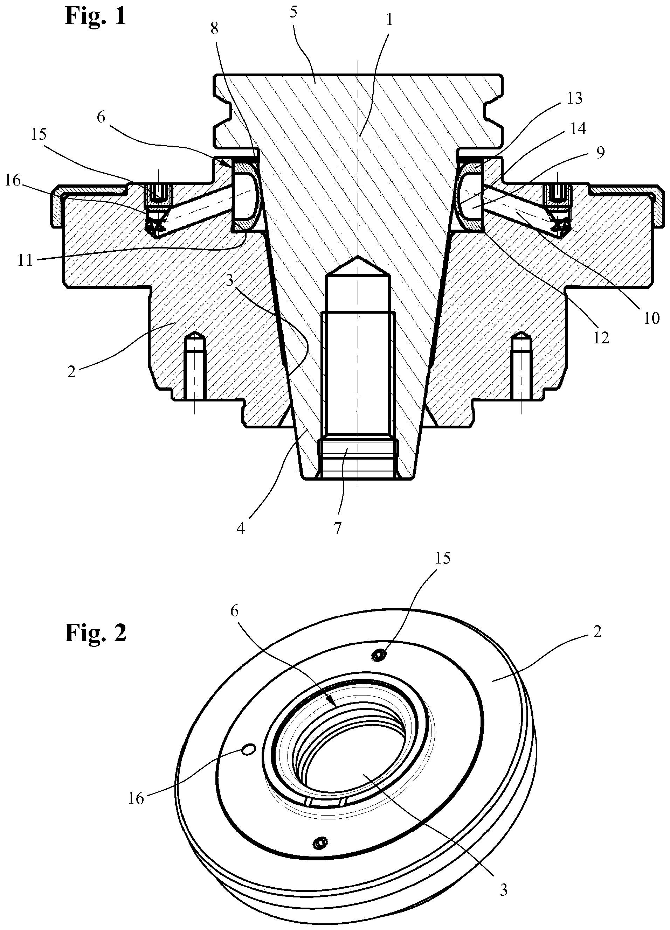

In den Figuren 1 und 2 ist eine Auswucht- oder Messvorrichtung mit einem durch einen Antrieb um eine Mittelachse 1 drehbaren Grundkörper 2 gezeigt, der eine hier als konische Aufnahmeöffnung ausgebildete Aufnahme 3 für einen hier kegelförmig ausgeführten Schaft 4 eines auszuwuchtenden oder zu vermessenden Bauteils 5 enthält. Bei dem Bauteil 5 kann es sich z.B. um einen Werkzeughalter, um ein Werkzeug oder um ein anderes auszuwuchtendes oder zu vermessendes Bauteil handeln. In dem Grundkörper 2 ist ein ringförmiges Zentrierelement 6 zur Rundlaufzentrierung des Bauteils 5 in der Aufnahme 3 des Grundkörpers 2 angeordnet. Der Grundkörper 2 und das Zentrierelement 6 sind Teile einer Auswucht- oder Messvorrichtung, die in einer Auswucht- oder Messmaschine zum Auswuchten oder Vermessen rotierender Bauteile eingesetzt wird.

In der gezeigten Ausführung ist der Grundkörper 2 als Adapter zur Befestigung auf einer Maschinenspindel ausgebildet. Dadurch kann die Auswucht- oder Messvorrichtung relativ schnell und einfach an unterschiedliche Typen von Kupplungsschäften an Werkzeugen oder Werkzeughaltern angepasst werden. Der Grundkörper 2 kann aber auch die z.B. motorisch angetriebene Maschinenspindel selbst sein.

Bei dem in Figur 1 gezeigten Ausführungsbeispiel ist die Aufnahme 3 als konische Aufnahmeöffnung zur Aufnahme eines als Kupplungsschaft ausgebildeten konischen Schafts 4 des Bauteils 5 ausgeführt. Die Aufnahme 3 kann aber auch als zylindrische Aufnahmeöffnung für einen zylindrischen Schaft oder auf andere geeignete Weise ausgebildet sein. Das Bauteil 5 enthält am unteren Ende des Schafts 4 eine Gewindebohrung 7, die zum Einschrauben eines Spannzapfens einer an sich bekannten und daher nicht dargestellten Spannvorrichtung dient. Über diese Spannvorrichtung kann das Bauteil 5 mit dem Schaft 4 in die Aufnahme 3 des Grundkörpers 2 eingezogen und dort fest gespannt werden.

In der dargestellten Ausführung ist das Zentrierelement 6 als separater Zentrierring in eine ringförmige Vertiefung 8 auf der Oberseite des Grundkörpers 2 eingesetzt. Das Zentrierelement 6 kann aber auch einteilig mit dem Grundkörper 2 ausgeführt sein. Zwischen dem Zentrierelement 6 und dem Grundkörper 2 wird ein mit Druckluft oder einem anderen Druckfluid beaufschlagbarer Druckraum 9 begrenzt. Durch Veränderung des Drucks innerhalb des Druckraums 9 kann so die radiale Vorspannung des Zentrierelements 6 verändert werden. Durch Zuführung des Druckfluids in den Druckraum 9 kann z.B. das Zentrierelement 6 radial nach innen gedrückt und damit die Vorspannung des Zentrierelements 6 erhöht werden. Für die Zuführung des Druckfluids zu dem Druckraum 9 sind in dem Grundkörper 2 eine oder mehrere in den Druckraum 9 mündende Bohrungen 10 vorgesehen.

Das ringförmige Zentrierelement 6 weist in der Ausführung von Figur 1 einen C-förmigen Querschnitt mit zwei einer Innenwand 11 der Vertiefung 8 zugewandten Stützschenkeln 12 und 13 und einem dem Kupplungsschaft 4 zugewandten biegsamen und hier leicht gebogenen inneren Stützbereich 14 zwischen den beiden Stützschenkeln 12 und 13 auf. Über die beiden voneinander beabstandeten parallelen Stützschenkel 12 und 13 stützt sich das ringförmige Zentrierelement 6 an dem Grundkörper 2 ab.

Bei der gezeigten Ausführung liegen beide Stützschenkel 12 und 13 an der Innenwand 11 der ringförmigen Vertiefung 8 an. Der leicht gebogene Stützbereich 14 an der Innenseite des ringförmigen Zentrierelements 6 ist in Radialrichtung elastisch federnd und steht bei nicht eingesetztem Bauteil 5 gegenüber der Aufnahme 3 nach innen vor. Dadurch kann das Zentrierelement 6 über den inneren biegsamen und elastisch federnden Stützbereich 14 auch ohne Druckbeaufschlagung des Druckraums 9 eine radiale Vorspannung zur Zentrierung des Kupplungsschafts 4 innerhalb der als konische Aufnahmeöffnung ausgebildeten Aufnahme 3 bei dessen Einführung erzeugen. Der Druckraum 9 wird bei dieser Ausführung durch die Innenwand 11 und die Innenseiten des gebogenen Stützbereichs 14 und der beiden Stützschenkel 12 und 13 begrenzt. Wird der Druck innerhalb des radial um das ringförmige Zentrierelement 6 verlaufenden Druckraums 9 durch Zuführung eines Druckfluids erhöht, kann der gebogene Stützbereich 14 radial nach innen gedrückt und dadurch die Vorspannung des Zentrierelements erhöht werden. Die Zuführung des Druckfluids zu dem Druckraum 9 kann über eine oder mehrere Bohrungen 10 erfolgen.

Die Druckbeaufschlagung kann über einen oder mehrere Kolben erfolgen, die in eine Bohrung gedrückt werden und dadurch das Druckfluid aus der Bohrung in den Druckraum 9 verdrängen. Der Kolben kann die Form von Gewindestiften 15 haben, die in eine Gewindebohrung 16 eingedreht werden. In einer bevorzugten Ausführungsform ragen die Gewindestifte 15 in Lösestellung aus dem Grundkörper 2 heraus und dienen so als optische Anzeige dafür, dass der Druckraum 9 nicht mit Druck beaufschlagt ist. In der Spannstellung schließen die Gewindestifte 15 bündig mit der Oberfläche des Grundkörpers 2 ab und zeigen so die Spannstellung an.

In einer weiteren nicht dargestellten Ausführungsform wird die Druckbeaufschlagung des Druckraums 9 automatisch über eine Spannvorrichtung bewirkt. Die Spannvorrichtung betätigt zu diesem Zweck einen Kolben, der das Druckfluid in den Druckraum presst. Gleichzeitig kann die Spannvorrichtung dazu dienen, das Bauteil in Richtung der Mittelachse in die Aufnahme 3 zu ziehen. Die Bohrung, in der sich der Kolben bewegt, kann Entlastungsbohrungen aufweisen, die derart angeordnet sind, dass sich der Druck erst gegen Ende der Spannbewegung aufbaut. Auf diese Weise kann das Bauteil zunächst ohne wesentliche Reibung in die Aufnahme 3 eingezogen werden. Erst wenn die axiale Bewegung nahezu zum Stillstand gekommen ist, wird der Druckraum 9 mit Druck beaufschlagt.

Bei der gezeigten Ausführung ist in dem Grundkörper 2 nur ein Zentrierelement 6 angeordnet. Es können aber auch mehrere übereinander angeordnete Zentrierelemente 6 vorgesehen sein.

Es versteht sich, dass die Erfindung nicht auf Bauteile mit schaftartigen Spannabschnitten beschränkt ist. In analoger Weise kann der Grundkörper 6 auch die Form eines Zapfens haben, an dessen Außenseite das Zentrierelement 6 angebracht ist. In diesem Fall wird bei Druckbeaufschlagung des Druckraums 9 das Zentrierelement 6 radial nach außen gedrückt und kann so ein Bauteil 5 spannen, das eine entsprechende Bohrung aufweist.

## Patentansprüche

1. Auswucht- oder Messvorrichtung, die einen um eine Mittelachse (1) drehbaren Grundkörper (2) mit einer Aufnahme (3) für einen Kupplungsschaft (4) eines auszuwuchtenden oder zu vermessenden Bauteils (5) und mindestens ein in dem Grundkörper (2) angeordnetes Zentrierelement (6) mit einem in Radialrichtung elastisch federnden und gegenüber der Aufnahme (3) vorstehenden Stützbereich (14) zur Zentrierung des Kupplungsschafts (4) enthält, **dadurch gekennzeichnet, dass** die radiale Vorspannung des Zentrierelements (6) durch ein Druckfluid veränderbar ist.

2. Auswucht- oder Messvorrichtung nach Anspruch 1, **dadurch gekennzeichnet, dass** zwischen dem mindestens einen Zentrierelement (6) und dem Grundkörper (2) ein mit dem Druckfluid beaufschlagbarer Druckraum (9) begrenzt wird.

3. Auswucht- oder Messvorrichtung nach Anspruch 1 oder 2, **dadurch gekennzeichnet, dass** das Zentrierelement (6) einen C-förmigen Querschnitt aufweist.

4. Auswucht- oder Messvorrichtung nach einem der Ansprüche 1 bis 3, **dadurch gekennzeichnet, dass** das mindestens eine Zentrierelement (6) einteilig mit dem Grundkörper (2) ausgebildet ist.

5. Auswucht- oder Messvorrichtung nach einem der Ansprüche 1 bis 4, **dadurch gekennzeichnet, dass** das in dem Grundkörper (2) eine oder mehrere in den Druckraum (9) mündende Bohrungen (10) oder Durchgänge für die Zufuhr des Druckfluids zu dem Druckraum (9) angeordnet sind.

6. Auswucht- oder Messvorrichtung nach Anspruch 5, **dadurch gekennzeichnet, dass** das Druckfluid durch einen oder mehrere Kolben in die Bohrungen (10) oder Durchgänge gedrückt wird.

7. Auswucht- oder Messvorrichtung nach Anspruch 6, **dadurch gekennzeichnet, dass** die Kolben in Form von Gewindestiften (15) ausgebildet sind, die in eine Gewindebohrung (16) eingedreht werden.

8. Auswucht- oder Messvorrichtung nach Anspruch 7, **dadurch gekennzeichnet, dass** die Gewindestifte (15) in einer Lösestellung aus dem Grundkörper (2) vorstehen und in einer Spannstellung bündig mit dem Grundkörper (2) abschließen.

9. Auswucht- oder Messvorrichtung nach einem der Ansprüche 6 bis 8, **dadurch gekennzeichnet, dass** die Bohrung (10), in der sich der Kolben bewegt, Entlastungsbohrungen aufweist, die derart angeordnet sind, dass sich der Druck erst gegen Ende der Spannbewegung aufbaut.

10. Auswucht- oder Messvorrichtung nach Anspruch 9, **dadurch gekennzeichnet, dass** das mindestens eine Zentrierelement (6) in eine ringförmige Vertiefung (8) an der Oberseite des Grundkörpers (2) eingesetzt ist.

11. Auswucht- oder Messvorrichtung nach einem der Ansprüche 1 bis 10, **dadurch gekennzeichnet, dass** das mindestens eine Zentrierelement (6) als Zentrierring mit einem biegsamen inneren Stützbereich (14) und zwei zu einer Innenwand (11) der Vertiefung (8) weisenden Stützschenkeln (12, 13) ausgebildet ist.

12. Auswucht- oder Messvorrichtung nach Anspruch 11, **dadurch gekennzeichnet, dass** das Zentrierelement (6) durch die Stützschenkel (12, 13) an der Innenwand (11) der Vertiefung (8) abgestützt ist.

13. Auswucht- oder Messvorrichtung nach Anspruch 11 oder 12, **dadurch gekennzeichnet, dass** der Druckraum (9) durch die Innenwand (11) der Vertiefung (9) und die Innenseiten des biegsamen Stützbereichs (14) und der beiden Stützschenkel (12, 13) begrenzt wird.

14. Auswucht- oder Messvorrichtung nach einem der Ansprüche 1 bis 13, **dadurch gekennzeichnet, dass** der Stützbereich (14) gegenüber der Aufnahme (3) nach innen vorsteht.

15. Auswucht- oder Messvorrichtung nach einem der Ansprüche 1 bis 9, **dadurch gekennzeichnet, dass** der Grundkörper (2) als Zapfen ausgebildet ist, an dessen Außenseite das Zentrierelement (6) angebracht ist.

16. Auswucht- oder Messmaschine mit einer Auswucht- oder Messvorrichtung, **dadurch gekennzeichnet, dass** die Auswucht- oder Messvorrichtung nach einem der Ansprüche 1 bis 15 ausgebildet ist.

## Claims

1. Balancing or measuring apparatus which comprises a main body (2) which can be rotated about a centre axis (1) with a receptacle (3) for a coupling shank (4) of a component (5) to be balanced or to be measured, and at least one centring element (6) which is arranged in the main body (2) with a supporting region (14) which is elastically resilient in the radial direction and projects with respect to the receptacle (3) for centring the coupling shank (4), **characterized in that** the radial prestress of the centring element (6) can be changed by way of a pressure fluid.

2. Balancing or measuring apparatus according to Claim 1, **characterized in that** a pressure space (9) which can be loaded with the pressure fluid is delimited between the at least one centring element (6) and the main body (2).

3. Balancing or measuring apparatus according to Claim 1 or 2, **characterized in that** the centring element (6) has a C-shaped cross section.

4. Balancing or measuring apparatus according to one of Claims 1 to 3, **characterized in that** the at least one centring element (6) is configured in one piece with the main body (2).

5. Balancing or measuring apparatus according to one of Claims 1 to 4, **characterized in that** one or more bores (10) or passages which open into the pressure space (9) for the feed of the pressure fluid to the pressure space (9) are arranged in the main body (2).

6. Balancing or measuring apparatus according to Claim 5, **characterized in that** the pressure fluid is pressed by way of one or more pistons into the bores (10) or passages.

7. Balancing or measuring apparatus according to Claim 6, **characterized in that** the pistons are configured in the form of threaded pins (15) which are screwed into a threaded bore (16).

8. Balancing or measuring apparatus according to Claim 7, **characterized in that** the threaded pins (15) project out of the main body (2) in a released position and terminate flush with the main body (2) in a clamped position.

9. Balancing or measuring apparatus according to one of Claims 6 to 8, **characterized in that** the bore (10), in which the piston moves, has relief bores which are arranged in such a way that the pressure is built up only near the end of the clamping movement.

10. Balancing or measuring apparatus according to Claim 9, **characterized in that** the at least one centring element (6) is inserted into an annular depression (8) on the upper side of the main body (2).

11. Balancing or measuring apparatus according to one of Claims 1 to 10, **characterized in that** the at least one centring element (6) is configured as a centring ring with a flexible inner supporting region (14) and two supporting limbs (12, 13) which point towards an inner wall (11) of the depression (8).

12. Balancing or measuring apparatus according to Claim 11, **characterized in that** the centring element (6) is supported by way of the supporting limbs (12, 13) on the inner wall (11) of the depression (8).

13. Balancing or measuring apparatus according to Claim 11 or 12, **characterized in that** the pressure space (9) is delimited by way of the inner wall (11) of the depression (9) and the inner sides of the flexible supporting region (14) and the two supporting limbs (12, 13).

14. Balancing or measuring apparatus according to one of Claims 1 to 13, **characterized in that** the supporting region (14) projects towards the inside with respect to the receptacle (3).

15. Balancing or measuring apparatus according to one of Claims 1 to 9, **characterized in that** the main body (2) is configured as a journal, to the outer side of which the centring element (6) is attached.

16. Balancing or measuring machine having a balancing or measuring apparatus, **characterized in that** the balancing or measuring apparatus is configured according to one of Claims 1 to 15.

## Revendications

1. Dispositif d'équilibrage ou de mesure, qui contient un corps de base (2) pouvant tourner autour d'un axe central (1) avec un logement (3) pour un arbre de couplage (4) d'une pièce à équilibrer ou à mesurer (5) et au moins un élément de centrage (6) disposé dans le corps de base (2) avec une région d'appui (14) élastique en direction radiale et saillante par rapport au logement (3) pour le centrage de l'arbre de couplage (4), **caractérisé en ce que** la précontrainte radiale de l'élément de centrage (6) peut être modifiée au moyen d'un fluide sous pression.

2. Dispositif d'équilibrage ou de mesure selon la revendication 1, **caractérisé en ce qu'**une chambre sous pression (9) pouvant être alimentée avec le fluide sous pression est limitée entre ledit au moins un élément de centrage (6) et le corps de base (2).

3. Dispositif d'équilibrage ou de mesure selon une revendication 1 ou 2, **caractérisé en ce que** l'élément de centrage (6) présente une section transversale en forme de C.

4. Dispositif d'équilibrage ou de mesure selon l'une quelconque des revendications 1 à 3, **caractérisé en ce que** ledit au moins un élément de centrage (6) est réalisé d'une seule pièce avec le corps de base (2).

5. Dispositif d'équilibrage ou de mesure selon l'une quelconque des revendications 1 à 4, **caractérisé en ce qu'**un ou plusieurs trous (10) ou passages débouchant dans la chambre sous pression (9) est/sont disposés dans le corps de base (2) pour la fourniture du fluide sous pression à la chambre sous pression (9).

6. Dispositif d'équilibrage ou de mesure selon la revendication 5, **caractérisé en ce que** le fluide sous pression est refoulé dans les trous (10) ou les passages au moyen d'un ou de plusieurs piston(s).

7. Dispositif d'équilibrage ou de mesure selon la revendication 6, **caractérisé en ce que** les pistons sont réalisés sous forme de tiges filetées (15), qui sont vissées dans un alésage fileté (16).

8. Dispositif d'équilibrage ou de mesure selon la revendication 7, **caractérisé en ce que** les tiges filetées (15) sont saillantes hors du corps de base (2) dans une position de libération et sont enfoncées à fleur avec le corps de base (2) dans une position de serrage.

9. Dispositif d'équilibrage ou de mesure selon l'une quelconque des revendications 6 à 8, **caractérisé en ce que** le trou (10), dans lequel le piston se déplace, présente des trous de délestage, qui sont disposés de telle manière que la pression ne s'établisse que vers la fin du mouvement de serrage.

10. Dispositif d'équilibrage ou de mesure selon la revendication 9, **caractérisé en ce que** ledit au moins un élément de centrage (6) est inséré dans un creux annulaire (8) sur le côté supérieur du corps de base (2).

11. Dispositif d'équilibrage ou de mesure selon l'une quelconque des revendications 1 à 10, **caractérisé en ce que** ledit au moins un élément de centrage (6) est formé par une bague de centrage avec une partie d'appui intérieure flexible (14) et deux branches d'appui (12, 13) dirigées vers une paroi intérieure (11) du creux (8).

12. Dispositif d'équilibrage ou de mesure selon la revendication 11, **caractérisé en ce que** l'élément de centrage (6) est appuyé sur la paroi intérieure (11) du creux (8) par les branches d'appui (12, 13).

13. Dispositif d'équilibrage ou de mesure selon une revendication 11 ou 12, **caractérisé en ce que** la chambre sous pression (9) est limitée par la paroi intérieure (11) du creux (9) et les côtés intérieurs de la région d'appui flexible (14) et des deux branches d'appui (12, 13) .

14. Dispositif d'équilibrage ou de mesure selon l'une quelconque des revendications 1 à 13, **caractérisé en ce que** la région d'appui (14) est saillante vers l'intérieur par rapport au logement (3).

15. Dispositif d'équilibrage ou de mesure selon l'une quelconque des revendications 1 à 9, **caractérisé en ce que** le corps de base (2) est réalisé sous forme de tourillon, sur le côté extérieur duquel l'élément de centrage (6) est monté.

16. Machine d'équilibrage ou de mesure comportant un dispositif d'équilibrage ou de mesure, **caractérisée en ce que** le dispositif d'équilibrage ou de mesure est réalisé selon l'une quelconque des revendications 1 à 15.
